# EUROPÄISCHE PATENTSCHRIFT

(11) **EP 1 684 055 B1**
(45) Veröffentlichungstag und Bekanntmachung des Hinweises auf die Patenterteilung: **13.04.2011**
(21) Anmeldenummer: 05022876.6
(22) Anmeldetag: 20.10.2005
(51) Int. Cl.: G01F 1/84

(54) **Coriolismassendurchflussmessgerät**
Coriolis mass flow meter
Débitmètre massique à effet Coriolis

(30) Priorität: 21.01.2005 DE 102005003161
(43) Veröffentlichungstag der Anmeldung: 26.07.2006
(73) Patentinhaber: Krohne AG, 4019 Basel (CH)
(72) Erfinder: Hussain, Youssif, Dr., Weston Favell Northampton NN3 3DA (GB); Rolph, Chris, Hartwell Northampton NN7 2HA (GB); Cook, Vince, Earls Barton Norhants NN6 0NA (GB)
(74) Vertreter: Gesthuysen, von Rohr & Eggert

(56) Entgegenhaltungen:
- EP-A- 1 279 935
- US-A- 5 602 345

## Beschreibung

Die Erfindung betrifft ein Massendurchflußmeßgerät, das nach dem Coriolis-Prinzip arbeitet, mit zwei geraden, in einer gemeinsamen Ebene parallel zueinander verlaufenden Rohren und zwei Verbindungseinrichtungen, mittels derer die beiden Meßrohre miteinander verbunden sind.

Die vorliegende Erfindung betrifft also solche Coriolis-Massendurchflußmeßgeräte, die wenigstens zwei Meßrohre aufweisen, die im nichtschwingenden Zustand in einer gemeinsamen Ebene verlaufen und parallel zueinander sind. Wesentlich bei solchen Coriolis-Massendurchflußmeßgeräten mit zwei oder mehr Meßrohren ist das Vorsehen wenigstens einer, gegebenenfalls auch zweier Verbindungseinrichtungen, wie oben beschrieben. Diese Verbindungseinrichtungen bestimmen die effektive Länge des Meßbereichs, da sie die Meßrohre fixieren und damit bei der Schwingungsanregung der Meßrohre jeweils einen Schwingungsknoten definieren. Solche Verbindungseinrichtungen werden daher auch als Schwingungsknotenplatten (Node-Plates) bezeichnet.

Während sich zwischen zwei solchen Schwingungsknotenplatten der eigentliche Meßbereich der Meßrohre befindet, stellen die einlaufseitigen bzw. auslaufseitigen Abschnitte der Meßrohre vor bzw. hinter den Schwingungsknotenplatten die jeweilige Verbindung zu dem Rohrleitungssystem her in das das Coriolis-Massendurchflußmeßgerät eingebaut ist. Dabei tragen diese einlauf- bzw. auslaufseitigen Abschnitte der Meßrohre auch zur Schwingungsisolierung des Coriolis-Massendurchflußmeßgeräts von dem Rohrleitungssystem bei.

Neben der Bestimmung des effektiven Meßbereichs des Coriolis-Massendurchflußmeßgeräts dienen die Verbindungseinrichtungen auch dazu, die Anregungsschwingungen der Meßrohre, die innerhalb der gemeinsamen Ebene der Meßrohre erfolgen, von dazu orthogonalen Schwingungen frequenzmäßig zu trennen. Je größer der Frequenzabstand zwischen diesen beiden Schwingungen ist, um so weniger beeinflussen sich diese beiden Schwingungen untereinander, so daß es letztlich auch zu einer entsprechend geringen Beeinflussung des Meßsignals kommt, Diesbezüglich besteht bei aus der Praxis bekannten Coriolis-Massendurchflußmeßgeräten mit zwei oder mehr Meßrohren jedoch noch Verbesserungsbedarf, da die Beeinflussung der Anregungsschwingung durch dazu orthogonale Schwingungen der Meßrohre und damit letztlich auch die Störung des Meßsignals noch zu groß ist.

Beispiele für solche Coriolis-Massendurchflußmeßgerät sind in EP 1 279 935, US 5 602 345 und US 4 781 069 gezeigt.

Dementsprechend ist es die Aufgabe der Erfindung, ein derartiges Coriolis-Massendurchflußmeßgerät anzugeben, bei dem die Anregungsschwingungen der Meßrohre durch dazu orthogonale Schwingungen der Meßrohre möglichst wenig beeinflußt werden.

Ausgehend von dem eingangs beschriebenen Coriolis-Massendurchflußmeßgerät ist die zuvor hergeleitete und aufgezeigte Aufgabe dadurch gelöst, daß die Verbindungseinrichtungen derart ausgebildet und angeordnet sind, daß ihre Biegesteifigkeit

für Biegungen in der gemeinsamen Ebene der Meßrohre, in der im allgemeinen auch die Anregungsschwingungen der Meßrohre erfolgen, größer ist als die Torsionssteifigkeit für Torsionsschwingungen um eine derartige Achse, die die Verbindungsstellen der Verbindungseinrichtung mit den beiden Meßrohren miteinander verbindet. Da solche Torsionsschwingungen der Verbindungseinrichtung angeregt werden, wenn gegenphasige Schwingungen der Meßrohre senkrecht zu ihrer gemeinsamen Ebene angeregt werden, und Biegeschwingungen der Verbindungseinrichtung in der gemeinsamen Ebene der Meßrohre dann auftreten, wenn die Meßrohre in dieser Ebene zu Anregungsschwingungen angeregt werden, werden diese beide Arten von Schwingungen ― Anregungsschwingungen einerseits und Schwingungen senkrecht dazu andererseits - durch die Verbindungseinrichtungen unterschiedlich beeinflußt. Während die Verbindungseinrichtung nämlich gegenphasigen Schwingungen senkrecht zur gemeinsamen Ebene der Meßrohr einen geringeren Biegewiderstand entgegensetzt, ist der Biegewiderstand für Schwingungen der Meßrohre in ihrer gemeinsamen Ebene, in der die Schwingungsanregung erfolgt, größer. Insgesamt wird damit frequenzmäßig eine gute Trennung von Anregungsschwingungen und dazu senkrechten Schwingungen der Meßrohre erzielt, wodurch im Ergebnis eine geringere Beeinflussung des Meßsignals durch die gegenseitige Beeinflussung von Anregungsschwingungen und Schwingungen senkrecht dazu erfolgt.

Grundsätzlich können die Verbindungseinrichtung auf vielfältige Weisen ausgebildet sein, um zu erzielen, daß ihre Biegesteifigkeit für Biegungen in der gemeinsamen Ebene der Meßrohre größer ist als ihre Torsionssteifigkeit für Torsionsschwingungen um die Verbindungslinie zwischen den beiden Meßrohren. Gemäß der Erfindung ist jedoch vorgesehen, daß die Verbindungseinrichtungen zwei einander gegenüberliegende, jeweils an beiden Meßrohren befestigte Versteifungsplatten aufweisen. Diese Versteifungsplatten können grundsätzlich gekrümmt sein, gemäß einer bevorzugten Weiterbildung der Erfindung sind sie jedoch eben ausgebildet.

Diese Versteifungsplatten können im übrigen direkt oder/und mittelbar an den Meßrohren bzw. miteinander befestigt sein. Gemäß der Erfindung ist dabei vorgesehen, daß die beiden Versteifungsplatten mittels einer Verbindungsplatte miteinander verbunden sind. Diese kann ebenfalls gekrümmt sein, bevorzugt ist sie jedoch auch eben ausgebildet.

Grundsätzlich können die Versteifungsplatten unterschiedlich zueinander ausgerichtet sein. Gemäß einer bevorzugten Weiterbildung der Erfindung ist jedoch vorgesehen, daß die Versteifungsplatten parallel zueinander und vorzugsweise parallel zu der gemeinsamen Ebene der Meßrohre, ausgerichtet sind.

Es ist möglich, die Verbindungseinrichtung derart auszugestalten, daß die Versteifungsplatten und die Verbindungsplatte die gleichen Dicken aufweisen. Auf diese Weise läßt sich die Verbindungseinrichtung z. B. einfach aus einer gemeinsamen Platte herstellen, nämlich durch Umbiegen ihrer Seitenbereiche. Gemäß einer bevorzugten Weiterbildung der Erfindung ist jedoch vorgesehen, daß die Dicke der Verbindungsplatte größer ist als die Dicken der Versteifungsplatten. Auf diese Weise wird eine noch größere frequenzmäßige Trennung der Anregungsschwingungen von den dazu senkrechten Schwingungen der Meßrohre erzielt. Indem die Dicke der Versteifungsplatten nämlich geringer wird, wird die Torsionssteifigkeit für Torsionsschwingungen um die Verbindungslinie zwischen den beiden Meßrohren wesentlich stärker verringert als die Biegesteifigkeit für Biegungen in der gemeinsamen Ebene der Meßrohre. Insofern setzt eine Verbindungseinrichtung mit dünneren Versteifungsplatten den Anregungsschwingungen in der gemeinsamen Ebene der Meßrohre einen wesentlich höheren Biegewiderstand entgegen, als Schwingungen senkrecht dazu, die zu Torsionsschwingungen der Verbindungseinrichtung führen.

Die Befestigung der Verbindungseinrichtung an den Meßrohren kann auf unterschiedliche Weisen vorgesehen sein. Insbesondere können die Versteifungsplatten, wie oben schon angedeutet, direkt oder mittelbar an den Meßrohren befestigt sein, nämlich z. B. über die Verbindungsplatte. Gemäß einer bevorzugten Weiterbildung der Erfindung ist dazu vorgesehen, daß die Verbindungsplatte für jedes Meßrohr eine Bohrung aufweist, durch die das jeweilige Meßrohr hindurchgeführt ist. Dabei ist gemäß einer bevorzugten Weiterbildung der Erfindung vorgesehen, daß der Innendurchmesser der Bohrung im wesentlichen dem Außendurchmesser der Meßrohre entspricht und die Meßrohre in den Bohrungen befestigt sind.

Für die Verbindungseinrichtung kommt eine Vielzahl von Materialien in Frage, wie verschiedene Metalle und Kunststoffmaterialien. Ebenso existiert für die Befestigung der Verbindungseinrichtung an den Meßrohren eine Vielzahl von Möglichkeiten, wie Verschweißen, Verlöten, Verkleben usw, insbesondere abhängig von den verwendeten Materialien.

Im einzelnen gibt es nun eine Vielzahl von Möglichkeiten, das erfindungsgemäße Coriolis-Massendurchflußmeßgerät auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt
- Fig. 1: eine Verbindungseinrichtung für ein Coriolis-Massendurchflußmeßgerät gemäß einem ersten bevorzugten Ausführungsbeispiel der Erfindung in perspektivischer Ansicht,
- Fig. 2: Meßrohre und Verbindungseinrichtungen eines Coriolis-Massendurchflußmeßgeräts gemäß dem ersten bevorzugten Ausführungsbeispiel der Erfindung in perspektivischer Ansicht,
- Fig. 3: eine Schwingungsanregung der Meßrohre des Coriolis-Massendurchflußmeßgeräts gemäß dem ersten bevorzugten Ausführungsbeispiel der Erfindung in Draufsicht,
- Fig. 4: Schwingungen der Meßrohre des Coriolis-Massendurchflußmeßgeräts gemäß dem ersten bevorzugten Ausführungsbeispiel der Erfindung senkrecht zur Ebene der Schwingungsanregung in einer Seitenansicht,
- Fig, 5: ausschnittsweise Meßrohre und eine Verbindungseinrichtung eines Coriolis-Maßßendurchflußmeßgcräts gemäß einem zweiten bevorzugten Ausführungsbeispiel der Erfindung,
- Fig. 6: ausschnittsweise Meßrohre und eine Verbindungseinrichtung eines Coriolis-Massendurchflußmeßgeräts gemäß einem Ausführungsbeispiel, das nicht Teil der Erfindung ist, und
- Fig. 7: eine Verbindungseinrichtung für ein Coriolis-Massendurchflußmeßgerät gemäß einem dritten bevorzugten Ausführungsbeispiel der Erfindung im Schnitt.

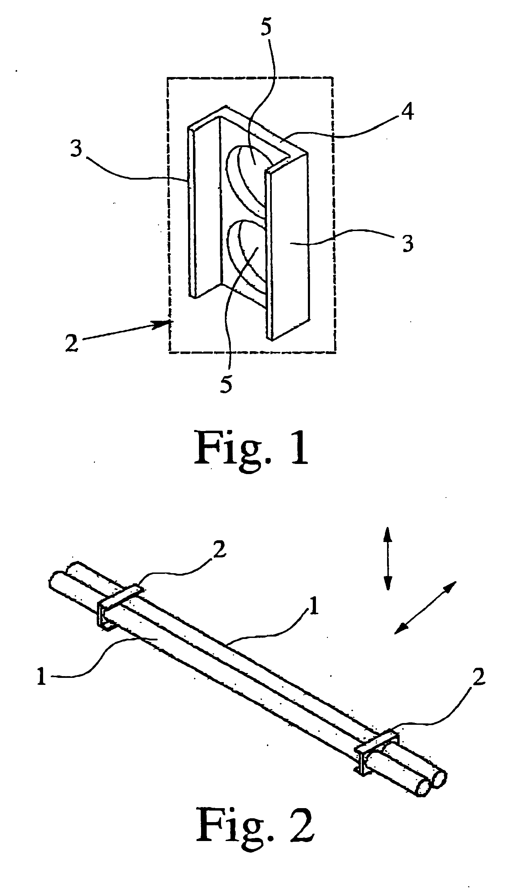

Aus den Fig. 1 und 2 ist mit den vorliegend relevanten Details ein Coriolis-Massendurchflußmeßgerät gemäß einem ersten bevorzugten Ausführungsbeispiel der Erfindung ersichtlich. Zu erkennen sind zwei gerade, parallel zueinander verlaufende Meßrohre 1, die mit zwei Verbindungseinrichtungen 2 versehen sind. Die Verbindungseinrichtungen 2 weisen im Querschnitt jeweils im wesentlichen ein U-Profil auf, wobei zwei Versteifungsplatten 3 derart mittels einer Verbindungsplatte 4 miteinander verbunden sind, daß die Versteifungsplatten 3 parallel zueinander und jeweils senkrecht zur Verbindungsplatte 4 ausgerichtet sind. Die Dicke der Versteifungsplatten 3 ist geringer als die Dikke der Verbindungsplatte 4, wodurch der schon oben angesprochene Effekt erzielt wird, daß der Biegewiderstand der Verbindungseinrichtungen 2 für Torsionsschwingungen deutlich geringer ist als für Biegeschwingungen in der gemeinsamen Ebene der Meßrohre 1.

In der Verbindungsplatte 4 sind zwei Bohrungen 5 vorgesehen, deren Innendurchmesser im wesentlichen dem Außendurchmesser der Meßrohre 1 entspricht. Auf diese Weise können die Verbindungseinrichtungen 2 auf die Meßrohre 1 aufgeschoben und dann mit diesen verbunden werden. Gemäß dem ersten bevorzugten Ausführungsbeispiel der Erfindung ist vorgesehen, daß die Verbindungseinrichtungen 2 aus Edelstahl hergestellt sind, so daß sie mit den Meßrohren 1 aus Titan verschweißt werden können.

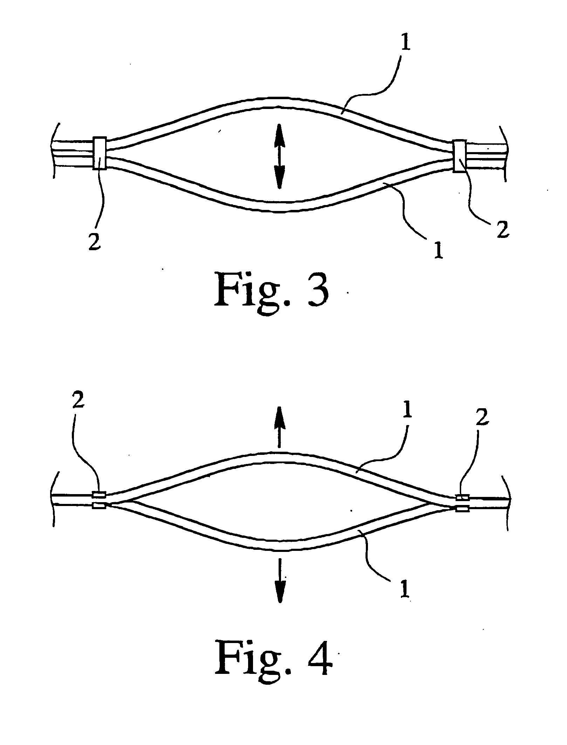

Aus den Fig. 3 und 4 ist nun ersichtlich, wie die Verbindungseinrichtungen 2 bei verschiedenen Schwingungen wirken. In Fig. 3 sind die beiden, mit zwei Verbindungseinrichtungen 2 verbundenen Meßrohre 1 in einer Draufsicht dargestellt, und zwar bei der maximalen Auslenkung einer Anregungsschwingung, die in der gemeinsamen Ebene der Meßrohre 1 erfolgt. Es ist erkennbar, daß bei solchen Anregungsschwingungen die Verbindungseinrichtungen 2 durch die schwingenden Meßrohre 1 derart beansprucht werden, daß es zu Biegeschwingungen der Verbindungseinrichtungen 2 in der gemeinsamen Ebene der Meßrohre 1 kommt. Dazu müssen die Versteifungsplatten 3 ebenfalls solche Biegeschwingungen in einer entsprechenden Ebene ausführen. Solchen Schwingungen wird durch das dafür erforderliche Stauchen der Versteifungsplatten 3 auf der einen Seite bzw. Dehnen auf der gegenüberliegenden Seite ein sehr hoher Biegewiderstand entgegengesetzt.

Im Gegensatz dazu lassen sich die Verbindungseinrichtungen 2 bei gegenphasigen Schwingungen der Meßrohre 1 senkrecht zur Ebene der Schwingungsanregungen verhältnismäßig leicht zu Torsionsschwingungen längs der Verbindungslinie zwischen den beiden Meßrohren 1 anregen, wie aus Fig. 4 ersichtlich. Damit wird eine frequenzmäßig gute Trennung dieser beiden Schwingungsarten erzielt, wodurch letztlich eine nur geringe Beeinflussung des Meßsignals durch senkrecht zu den Anregungsschwingungen erfolgende Schwingungen der Meßrohre erzielt wird.

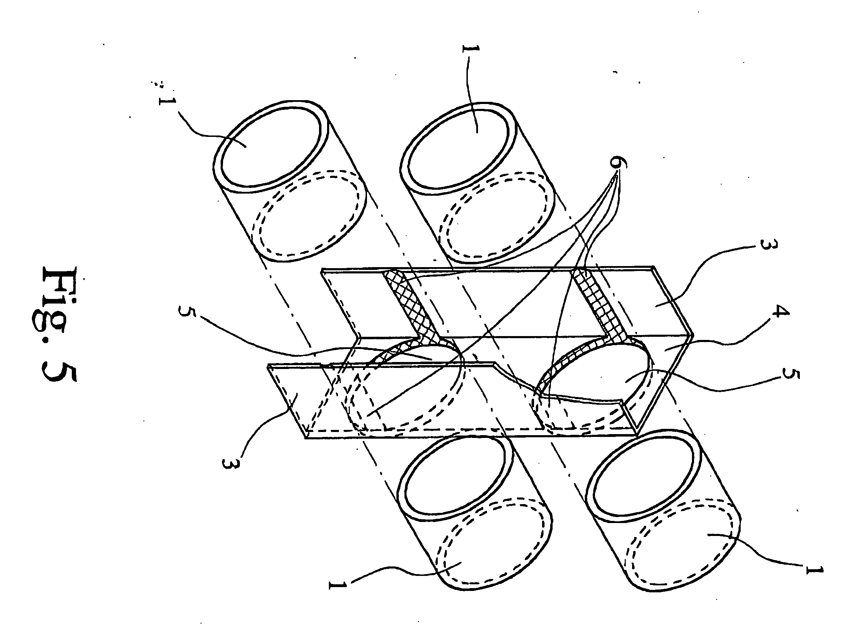

Aus Fig. 5 ist nun mit den relevanten Details und unter Weglassung von Abschnitten der Meßrohre 1 im Bereich der Verbindungseinrichtungen 2 zur besseren Sichtbarmachung der Befestigung der Meßrohre 1 an der Verbindungseinrichtung 2 ein Coriolis-Massendurchflußmeßgerät gemäß einem zweiten bevorzugten Ausführungsbeispiel der Erfindung ersichtlich. Dabei ist vorgesehen, daß die Meßrohre 1 an der Verbindungseinrichtung 2 nicht nur in den Bohrungen 5 befestigt sind, sondern auch an den Innenflächen der Versteifungsplatten 3. Wie aus Fig. 5 ersichtlich, sind dort ebenfalls Verschweißungen 6 mit den Meßrohren 1 vorgesehen. Eine derartige Befestigung ist insbesondere vorteilhaft, um eine gute Frequenztrennung bei längeren Meßrohren 1 zu erzielen, insbesondere wenn diese einen geringen Durchmesser aufweisen. Bei dieser Konstruktion wird nämlich erreicht, daß der Biegewiderstand, den die Verbindungseinrichtung 2 Biegeschwingungen in der gemeinsamen Ebene der Meßrohre 1 entgegengesetzt, nochmals deutlich erhöht wird, während die Torsionssteifigkeit kaum beeinflußt wird.

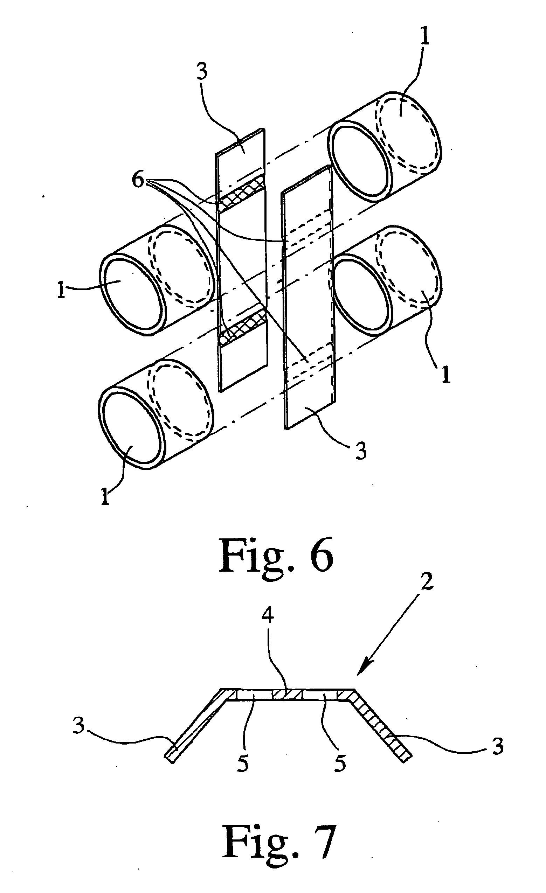

Aus Fig. 6 ist, entsprechend Fig. 5 mit allen relevanten Details und unter Weglassung der Abschnitte der Meßrohre 1 im Bereich der Befestigung an der Verbindungseinrichtung 2, ein Coriolis-Massendurchflußmeßgerät gemäß einem Ausführungsbeispiel, das nicht Teil der Erfindung ist, ersichtlich. Dabei besteht die Verbindungseinrichtung 2 nur aus zwei Versteifungsplatten 3, ohne daß diese mittels einer Verbindungsplatte 4 miteinander verbunden sind. Die Versteifungsplatten 3 sind, ähnlich wie bei dem Coriolis-Massendurchflußmeßgerät gemäß dem aus Fig. 5 ersichtlichen zweiten bevorzugten Ausführungsbeispiel der Erfindung, an ihren Innenflächen mit den Meßrohren 1 verschweißt, wie anhand der in Fig. 6 gezeigten Verschweißungen 6 ersichtlich. Diese Konstruktion ist insofern vorteilhaft, als daß sie sehr kostengünstig herstellbar und darüber hinaus leicht montierbar ist. Das Funktionsprinzip entspricht im wesentlichen dem des aus Fig. 5 ersichtlichen Coriolis-Massendurchflußmeßgeräts gemäß dem zweiten bevorzugten Ausführungsbeispiel der Erfindung, wobei lediglich auf die Wirkung der Verbindungsplatte 4 verzichtet worden ist, die jedoch im Vergleich mit der Wirkung der Versteifungsplatten 3 wesentlich geringer ist.

Aus Fig. 7 ist schließlich eine Verbindungseinrichtung 2 für ein Coriolis-Massendurchflußmeßgerät gemäß einem dritten bevorzugten Ausführungsbeispiel der Erfindung ersichtlich. Diese dort im Schnitt dargestellte Verbindungseinrichtung 2 weist ebenfalls zwei Versteifungsplatten 3 und eine diese verbindende Verbindungsplatte 4 auf, wobei die Verbindungsplatte 4 mit Bohrungen 5 versehen ist, durch die die Meßrohre 1 hindurchgeführt werden können, so daß die Verbindungseinrichtung 2 mit den Meßrohren 1 verbunden werden kann. Allerdings sind vorliegend die Versteifungsplatten 3 nicht parallel zueinander angeordnet. Gleichwohl wird auch hier der Effekt erzielt, daß Biegungen der Verbindungseinrichtung 2 in der gemeinsamen Ebene der Meßrohre 1 ein größerer Biegewiderstand entgegengesetzt wird, als Torsionsschwingungen, um die Verbindungslinie zwischen den beiden Meßrohren 1.

## Patentansprüche

1. Massendurchflußmeßgerät, das nach dem Coriolis-Prinzip arbeitet, mit zwei geraden, in einer gemeinsamenen Ebene parallel zueinander verlaufenden Meßrohren (1) und zwei Verbindungseinrichtungen (2), mittels derer die beiden Meßrohre (1) miteinander verbunden sind, **dadurch gekennzeichnet, daß** die Verbindungseinrichtungen (2) derart ausgebildet und angeordnet sind, daß ihre Biegesteifigkeit für Biegungen in der gemeinsamen Ebene der Meßrohre (1) größer ist als ihre Torsionssteifigkeit für Torsionsschwingungen um eine derartige Achse, die die Verbindungsstellen der Verbindungseinrichtungen (2) mit den beiden Meßrohren (1) verbindet, daß nämlich die Verbindungseinriehtungen (2) zwei einander gegenüberliegende, jeweils an beiden Meßrohren (1) befestigte Versteifungsplatten (3) und eine die beiden Versteifungsplatten (3) miteinander verbindende Verbindungsplatte (4) aufweisen.

2. Massendurchflußmeßgerät nach Anspruch 1, **dadurch gekennzeichnet, daß** die Dicke der Verbindungsplatte (4) größer ist als die Dicken der Versteifungsplatten (3).

3. Massendurchflußmeßgerät nach Anspruch 1 oder 2, **dadurch gekennzeichnet, daß** die Versteifungsplatten (3) parallel zueinander, vorzugsweise parallel zu der gemeinsamen Ebene der Meßrohre (1), ausgerichtet sind.

4. Massettdurchflußmeßgerät nach einem der Ansprüche 1 bis 3, **dadurch gekennzeichnet, daß** die Verbindungsplatte (4) für jedes Meßrohr (1) eine Bohrung (5) aufweist und das jeweilige Meßrohr (1) durch die entsprechende Bohrung (5) hindurchgeführt ist.

5. Massendurchflußmeßgerät nach Anspruch 4, **dadurch gekennzeichnet, daß** der Innendurchmesser der Bohrungen (5) im wesentlichen dem Außendurchmesser der Meßrohre (1) entspricht.

6. Massendurchflußmeßgerät nach Anspruch 5, **dadurch gekennzeichnet, daß** die Meßrohre (1) in den Bohrungen (5) befestigt sind.

## Claims

1. Mass flow meter which operates according to the Coriolis principle, having two straight measuring tubes (1), which run parallel to one another in a common plane, and two connecting devices (2) which are used to connect the two measuring tubes (1) to one another, **characterized in that** the connecting devices (2) are designed and arranged in such a manner that their bending stiffness for bending in the common plane of the measuring tubes (1) is greater than their torsional stiffness for torsional vibrations around an axis which connects the connecting points of the connecting devices (2) to the two measuring tubes (1), that is to say the connecting devices (2) have two reinforcement plates (3), which are opposite one another and are respectively fastened to the two measuring tubes (1), and a connecting plate (4) which connects the two reinforcement plates (3) to one another.

2. Mass flow meter according to Claim 1, **characterized in that** the thickness of the connecting plate (4) is greater than the thicknesses of the reinforcement plates (3).

3. Mass flow meter according to Claim 1 or 2, **characterized in that** the reinforcement plates (3) are oriented parallel to one another, preferably parallel to the common plane of the measuring tubes (1).

4. Mass flow meter according to one of Claims 1 to 3, **characterized in that** the connecting plate (4) has a hole (5) for each measuring tube (1), and the respective measuring tube (1) is guided through the corresponding hole (5).

5. Mass flow meter according to Claim 4, **characterized in that** the internal diameter of the holes (5) essentially corresponds to the external diameter of the measuring tubes (1).

6. Mass flow meter according to Claim 5, **characterized in that** the measuring tubes (1) are fastened in the holes (5).

## Revendications

1. Appareil de mesure du débit massique qui fonctionne selon le principe de Coriolis, comprenant deux tubes de mesure (1) droits qui s'étendent parallèlement l'un à l'autre dans un plan commun et deux dispositifs de liaison (2) au moyen desquels les deux tubes de mesure (1) sont reliés l'un à l'autre, **caractérisé en ce que** les dispositifs de liaison (2) sont configurés et disposés de telle sorte que leur résistance à la flexion pour les flexions dans le plan commun des tubes de mesure (1) soit supérieure à leur résistance à la torsion pour des oscillations de torsion autour d'un axe tel qu'il relie les points de liaison des dispositifs de liaison (2) avec les deux tubes de mesure (1), **en ce que** les dispositifs de liaison (2) présentent en fait deux plaques de raidissement (3) opposées l'une à l'autre, respectivement fixées aux deux tubes de mesure (1), ainsi qu'une plaque de liaison (4) qui relie ensemble les deux plaques de raidissement (3).

2. Appareil de mesure du débit massique selon la revendication 1, **caractérisé en ce que** l'épaisseur de la plaque de liaison (4) est supérieure à l'épaisseur des plaques de raidissement (3).

3. Appareil de mesure du débit massique selon la revendication 1 ou 2, **caractérisé en ce que** les plaques de raidissement (3) sont orientées parallèlement l'une à l'autre, de préférence parallèlement au plan commun des tubes de mesure (1).

4. Appareil de mesure du débit massique selon l'une des revendications 1 à 3, **caractérisé en ce que** la plaque de liaison (4) présente un orifice (5) pour chaque tube de mesure (1) et le tube de mesure (1) respectif passe à travers l'orifice (5) correspondant.

5. Appareil de mesure du débit massique selon la revendication 4, **caractérisé en ce que** le diamètre intérieur des orifices (5) correspond pour l'essentiel au diamètre extérieur des tubes de mesure (1).

6. Appareil de mesure du débit massique selon la revendication 5, **caractérisé en ce que** les tubes de mesure (1) sont fixés dans les orifices (5).
